# EUROPÄISCHE PATENTANMELDUNG

(11) **EP 1 306 574 A2**
(43) Veröffentlichungstag der Anmeldung: **02.05.2003**
(21) Anmeldenummer: 02015733.5
(22) Anmeldetag: 13.07.2002
(51) Int. Cl.: F16F 9/06, F16F 9/18

(54) **Schwingungsdämpfer mit einstellbarer Dämpfungskraft**

(30) Priorität: 26.10.2001 DE 10153011
(71) Anmelder: Sachs Race Engineering GmbH, 97424 Schweinfurt (DE)
(72) Erfinder: Rottenberger, Theo, Dipl.-Ing., 97705 Burkardroth (DE); Höhn, Matthias, Dipl.-Ing., 97320 Albertshofen (DE)

(57) **Zusammenfassung**

Schwingungsdämpfer mit einstellbarer Dämpferkraft, umfassend einen Zylinder (1), in dem ein Kolben (2) an einer Kolbenstange (3) axial beweglich geführt ist, wobei der Kolben den Zylinder in einen ersten (4) und einen zweiten (5) Arbeitsraum unterteilt, mindestens ein Dämpfungsventil (8) für die Zug- und Druckstufe, das in einer Strömungsverbindung (7) zwischen den beiden Arbeitsräumen angeordnet ist, wobei für die Zug- und Druckstufe mindestens noch ein weiteres Dämpfungsventil (12) vorgesehen ist, und dass ein Ausgleichsraum (9) zur Aufnahme des von der Kolbenstange verdrängten Dämpfungsmittel vorgesehen ist, wobei dem weiteren Ventil für die Druckstufe der Ausgleichsraum in Reihe nachgeschaltet ist.

## Beschreibung

Die Erfindung bezieht sich auf einen Schwingungsdämpfer mit einstellbarer Dämpfungskraft, umfassend einen Zylinder, in dem ein Kolben an einer Kolbenstange axial beweglich geführt ist, wobei der Kolben den Zylinder in einen ersten und einen zweiten Arbeitsraum unterteilt, mindestens ein Dämpfungsventil für die Zug- und Druckstufe, das in einer Strömungsverbindung zwischen den beiden Arbeitsräumen angeordnet ist, wobei für die Zug- und Druckstufe mindestens noch ein weiteres Dämpfungsventil vorgesehen ist, und dass ein Ausgleichsraum zur Aufnahme des von der Kolbenstange verdrängten Dämpfungsmittel vorgesehen ist.

Es sind bereits Schwingungsdämpfer bekannt (z. B. DE-PS 39 14 297), bei denen über eine mechanische oder sonstige Einstellvorrichtung die Vorspannung eines Federscheibenpaketes verändert, das die Dämpfung im Schwingungsdämpfer bewirkt. Der Einfluss auf die Dämpfungskraftkennlinie beschränkt sich jedoch auf einen relativ kleinen Bereich, der für höchste Ansprüche, wie sie beispielsweise für den Rennsport gelten, nicht ausreichend ist.

Darüber hinaus sind weitere einstellbare Schwingungsdämpfer bekannt (z. B. DE 195 42 293 A1), bei denen der Schwingungsdämpfer nach dem Einrohrprinzip aufgebaut ist. Dabei kompensiert ein gasgefüllter Ausgleichsraum die Volumendifferenz des verdrängten Dämpfungsmittels bei Eintauchen der Kolbenstange. Ein Trennkolben trennt den Ausgleichsraum vom unteren Arbeitsraum. Zur Vermeidung einer Blockierung der unteren Anschlussöffnung einer Strömungsverbindung ist ein Anschlag vorgesehen, der den Trennkolben in seiner Axialbewegung begrenzt. Die außenliegend angeordneten Dämpfungsventile beeinflussen die Dämpfungskraft in der Zug- und in der Druckstufe. Das Prinzip des Einrohrdämpfers, bei dem der Ausgleichsraum im gleichen Zylinder wie die Arbeitsräume angeordnet sind bewirkt, dass die Kraftabstützung zunächst auf dem Gaspolster vorgenommen werden und anschließend das verdrängte Dämpfungsmittel bei Eintauchen der Kolbenstange durch die Dämpfungsventile in der Druckstufe verlaufen. Diese Abstützung auf dem Gaspolster lässt sich mit Achsdämpfern ausführen, da die Kolbenstangendurchmesser geringer sind als bei einem Federbein, jedoch strömt lediglich ein geringes Volumen an Dämpfungsmitteln durch das externe Dämpfungsventil für die Druckstufe.

Aufgabe der vorliegenden Erfindung ist es, einen Schwingungsdämpfer mit einstellbarer Dämpfungskraft zu realisieren, bei dem in der Druckstufe durch ein Dämpfungsventil ein Druckaufbau erfolgt, so dass der Gasdruckdämpfer mit geringeren Gasdrücken betrieben werden kann.

Zur Lösung dieser Aufgabe ist erfindungsgemäß vorgesehen, dass im weiteren Ventil für die Druckstufe der Ausgleichsraum in Reihe nachgeschaltet ist.

Vorteilhaft ist hierbei, dass der Druckabbau durch die Dämpfung erfolgt, bevor das durch die Kolbenstange verdrängte Dämpfungsmittel in den Ausgleichsraum gelangt. Es werden somit geringere Gasdrücke benötigt, denn der Kolben stützt sich bei Eintauchen der Kolbenstange nicht zunächst primär auf dem Gasvolumen ab. Bei radführenden Federbeinen ist dies von besonderem Vorteil, denn durch die größeren Kolbenstangendurchmesser wird bedeutend mehr Volumen an Dämpfungsmittel verdrängt als bei einem normalen Achsdämpfer, und dass nach erfolgter Dämpfung durch das weitere Ventil im Ausgleichsraum lediglich geringere Gasdrücke vorhanden sein brauchen.

Nach einem weiteren, wesentlichen Merkmal ist vorgesehen, dass der Ausgleichsraum mittels eines Trennkolbens in einen gasgefüllten und in einen dämpfungsmittelgefüllten Teilraum gegliedert ist.

Eine wesentliche Ausführungsform sieht vor, dass das weitere Ventil nur in der Druckstufe durchströmbar ist. Dabei ist mit Vorteil das weitere Ventil mindestens zweistufig durchströmbar. Es ist auch eine mehr als zweistufige Durchströmung möglich.

Der Rückstrom des Dämpfungsmittels bei herausfahrender Kolbenstange wird gewährleistet dadurch, dass zusätzlich zum weiteren Ventil ein Rückschlagventil vorgesehen ist, welches in der Druckstufe schließt und in der Zugstufe öffnet. Durch das Rückströmen des Dämpfungsmittels bei herausfahrender Kolbenstange entspannt sich das Gaspolster im Ausgleichsraum, so dass sich der Trennkolben im Ausgleichsraum entsprechend axial verschieben kann.

Darüber hinaus ist zur Erzielung weiterer Dämpfungskraftstufen vorgesehen, dass für die Zugstufe zusätzlich noch ein weiteres Ventil vorgesehen ist, welches in einer Strömungsverbindung des ersten Arbeitsraumes zum zweiten Arbeitsraum angeordnet ist. Mit Vorteil ist dabei das weitere Ventil mindestens zweistufig durchströmbar, wobei auch mehr als zwei Stufen möglich sind.

Die eigentliche Grunddämpfung eines Schwingungsdämpfers erfolgt über den axial im Arbeitszylinder verschiebbaren Kolben, wobei dieser Kolben mit konstanten Durchlässen oder mit konstanten Durchlässen und zusätzlichen Dämpfungsventilen versehen werden kann. In Ausgestaltung der Erfindung ist nun vorgesehen, dass das Dämpfungsventil in einer Strömungsverbindung des Kolbens angeordnet ist und über außenliegende, in der Kolbenstange verlaufende Stellmittel einstellbar ist. Hierbei lassen sich mit Vorteil manuelle weitere Dämpfungskraftstufen einstellen, so dass auch die Grunddämpfung manuell beliebig variierbar ist.

Bevorzugte Ausführungsbeispiele der Erfindung sind in den Zeichnungen schematisch dargestellt.

Es zeigt:
- Fig. 1: Einen Schwingungsdämpfer mit einstellbarer Dämpfungskraft schematisch dargestellt;
- Fig. 2: eine konstruktive Ausführungsform eines Schwingungsdämpfers mit einstellbarer Dämpfungskraft gemäß Fig. 1 im Schnitt;
- Fig. 3: eine weitere Ausführungsform eines Schwingungsdämpfers gemäß Fig. 2; wobei von außen zugängliche Stellmittel zur Beeinflussung der Ventile im Kolben herangezogen werden.

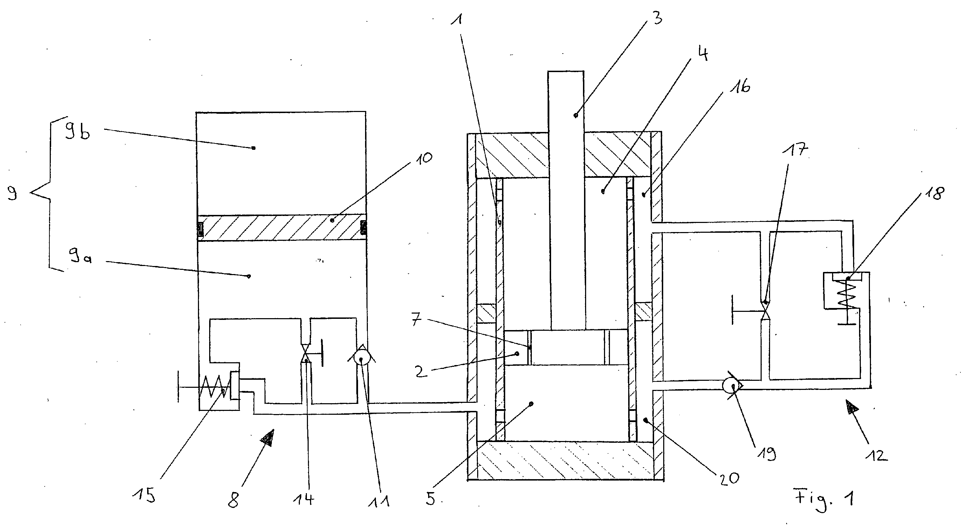

Der in Fig. 1 dargestellte einstellbare Schwingungsdämpfer besteht im Wesentlichen aus dem Zylinder 1, dem Kolben 2, der Kolbenstagen 3, wobei der Kolben 2 den Zylinder 1 in einen ersten Arbeitsraum 4 und einen zweiten Arbeitsraum 5 unterteilt. Im Kolben 2 sind Strömungsverbindungen 7 vorgesehen, die gegebenenfalls noch mit Dämpfungsventilen versehen werden können. Für die Druckstufe ist das weitere Ventil 8 vorgesehen, welches in Reihe mit dem Ausgleichsraum 9 geschaltet ist. Dabei ist der Teilraum 9a zur Aufnahme des Dämpfungsmittels und der Teilraum 9b zur Aufnahme des Gasdruckes bzw. Gaspolsters ausgebildet. Der Teilraum 9a sowie der Teilraum 9b werden durch den Trennkolben 10 gegeneinander abgedichtet. Das weitere Ventil 8 besteht aus dem Rückschlagventil 11, dem als konstanten Durchlass 14 ausgebildeten Teilventil, während das federbelastete Ventil 15 für die Druckstufe des Schwingungsdämpfers maßgebend zuständig ist.

Das zusätzliche weitere Ventil 12 dient der Dämpfung in der Zugstufe, das heißt wenn die Kolbenstange 3 ausfährt. Dabei fließt über den Ringraum 16 Dämpfungsmittel einerseits über den konstanten Durchlass 17 und das federbelastete Ventil 18 vorbei am Rückschlagventil 19 über den Ringraum 20 in den zweiten Arbeitsraum 5. Da durch die ausfahrende Kolbenstange 3 in der Zugstufe sich das Dämpfungsmittel entspannt, erfolgt ein Nachfluss von Dämpfungsmittel aus dem Ausgleichsraum 9a über das Rückschlagventil 11 und den unteren Ringraum 20 in den zweiten Arbeitsraum 5.

In der Druckstufe des Schwingungsdämpfers, das heißt bei Eintauchen der Kolbenstange, wird einerseits Dämpfungsmittel aus dem zweiten Arbeitsraum 5 über den unteren Ringraum 20, den konstanten Durchlass 14 sowie das federbelastete Ventil 15 in den Ausgleichsraum 9a geschoben. Dabei wird das Gaspolster im Ausgleichsraum 9b komprimiert und der Trennkolben 10 axial verschoben.

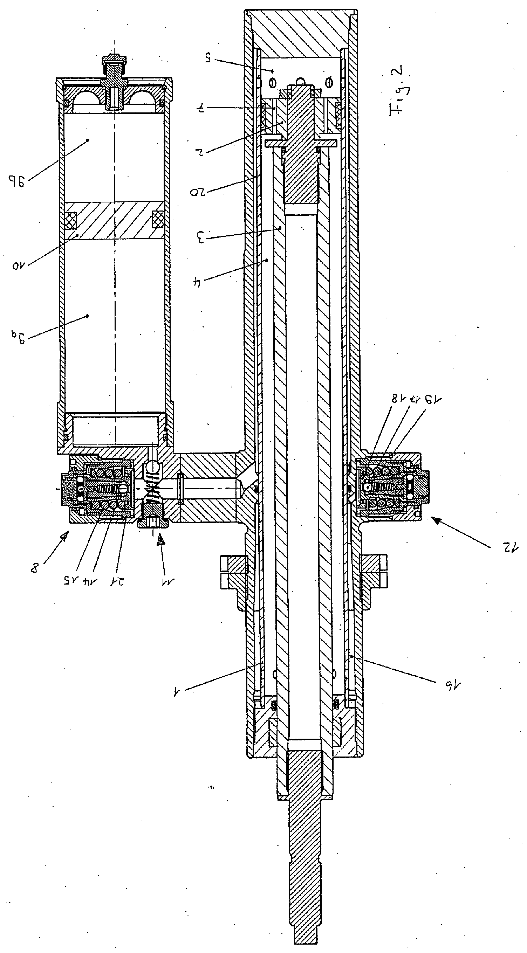

Aus der Fig. 2 ist als konstruktives Ausführungsbeispiel ein Schwingungsdämpfer mit einstellbarer Dämpfungskraft zu entnehmen, bei dem der Zylinder 1 vom Kolben 2 in den ersten und zweiten Arbeitsraum 4 bzw. 5 unterteilt wird. Die Strömungsverbindung 7 im Kolben 2 ist dabei als konstanter Durchlass ausgebildet. In die Druckstufe fließt Dämpfungsmittel aus dem zweiten Arbeitsraum 5 über den Ringraum 20 zum weiteren Ventil 8 und anschließend in den Ausgleichsraum 9. Der konstante Durchlass 14 ist als Öffnung mit einer federbelasteten Kugel ausgebildet. Dieses Rückschlagventil kann jedoch auch ohne weiteres entfallen. Das federbelastete Ventil 15 verschließt oder öffnet die Bohrung durch einen Federteller 21. Der Rückfluss des Dämpfungsmittels vom Ausgleichsraum 9 erfolgt über ein Rückschlagventil 11, welches ebenfalls aus einem Durchlass und einer federbelasteten Kugel besteht.

Das zusätzliche weitere Ventil 12 wird in der Zugstufe wirksam, wobei das Dämpfungsmittel aus dem ersten Arbeitsraum 4 über den Ringraum 16 zum Ventil 12 leitet. Der konstante Durchlass 17 ist als federbelastete Kugel ausgeführt. Es ist an dieser Stelle ein Rückschlagventil notwendig um eine getrennte Verstellung vornehmen zu können, während das federbelastete Ventil 18 aus einem Ventilteller besteht und das Rückschlagventil in Form einer Bohrung vorgesehen ist.

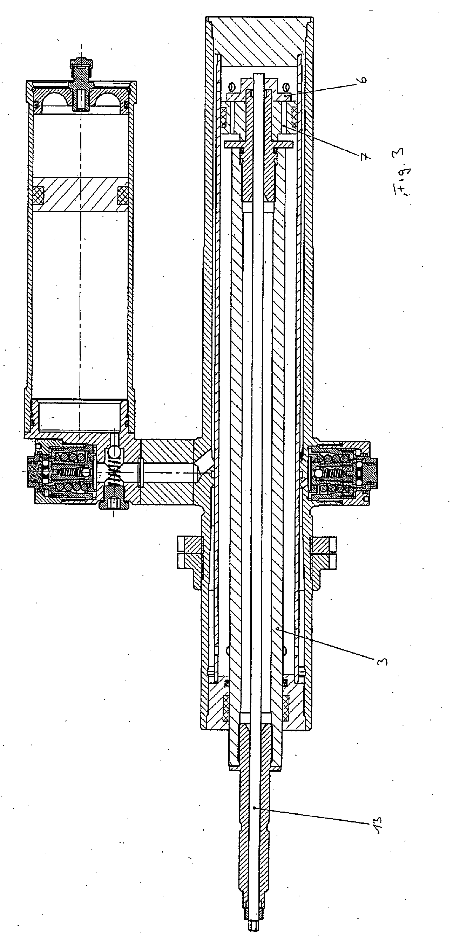

Aus der Fig. 3 ist eine weitere Ausführungsform des in Fig. 2 dargestellten Ausführungsbeispiels dargestellt, mit dem Unterschied, dass in der Kolbenstange 3 Stellmittel 13 verlaufen die von außen betätigt werden können, und die im Kolben die mit einem Ventil 6 versehenen Strömungsverbindungen 7 variieren können. Hierzu wird über die Stellmittel 13 eine entsprechende Vorspannung oder ein entsprechender Querschnitt der Strömungsverbindung 7 eingestellt, so dass sich insgesamt eine Vielzahl von Dämpfungskraftkennlinien erzielen lassen.

Die konstanten Durchlässe 14 bzw. 17 wie auch die federbelasteten Ventile 15 und 18 können jeweils durch von außen zugängliche Stellmittel variiert werden.

### Bezugszeichenliste

- 1.: Zylinder
- 2.: Kolben
- 3.: Kolbenstange
- 4.: erster Arbeitsraum
- 5.: zweiter Arbeitsraum
- 6.: Dämpfungsventil
- 7.: Strömungsverbindung
- 8.: weiteres Ventil
- 9.: Ausgleichsraum
- 10.: Trennkolben
- 11.: Rückschlagventil
- 12.: Ventil
- 13.: Stellmittel
- 14.: konstanter Durchlass
- 1 5.: federbelastetes Ventil
- 16.: Ringraum
- 17.: konstanter Durchlass
- 18.: federbelastetes Ventil
- 19.: Rückschlagventil
- 20.: Ringraum
- 21.: Federteller

## Patentansprüche

1. Schwingungsdämpfer mit einstellbarer Dämpferkraft, umfassend einen Zylinder, in dem ein Kolben an einer Kolbenstange axial beweglich geführt ist, wobei der Kolben den Zylinder in einen ersten und einen zweiten Arbeitsraum unterteilt, mindestens ein Dämpfungsventil für die Zug- und Druckstufe, das in einer Strömungsverbindung zwischen den beiden Arbeitsräumen angeordnet ist, wobei für die Zug- und Druckstufe mindestens noch ein weiteres Dämpfungsventil vorgesehen ist, und dass ein Ausgleichsraum zur Aufnahme des von der Kolbenstange verdrängten Dämpfungsmittel vorgesehen ist,
**dadurch gekennzeichnet,**
**dass** dem weiteren Ventil (8) für die Druckstufe der Ausgleichsraum (9) in Reihe nachgeschaltet ist.

2. Schwingungsdämpfer nach Anspruch 1,
**dadurch gekennzeichnet,**
**dass** der Ausgleichsraum (9) mittels eines Trennkolbens (10) in einen gasgefüllten (9b) und in einen dämpfungsmittelgefüllten Teilraum (9a) gegliedert ist.

3. Schwingungsdämpfer nach Anspruch 1,
**dadurch gekennzeichnet,**
**dass** das weitere Ventil (8) nur in der Druckstufe durchströmbar ist.

4. Schwingungsdämpfer nach Anspruch 1,
**dadurch gekennzeichnet,**
**dass** das weitere Ventil (8) in der Druckstufe mindestens zweistufig durchströmbar ist.

5. Schwingungsdämpfer nach Anspruch 1,
**dadurch gekennzeichnet,**
**dass** zusätzlich zum weiteren Ventil (8) ein Rückschlagventil (11) vorgesehen ist, welches in der Druckstufe schließt und in der Zugstufe öffnet.

6. Schwingungsdämpfer nach Anspruch 1,
**dadurch gekennzeichnet,**
**dass** für die Zugstufe zusätzlich noch ein weiteres Ventil (12) vorgesehen ist, welches in einer Strömungsverbindung des ersten Arbeitsraumes (4) zum zweiten Arbeitsraum (5) angeordnet ist.

7. Schwingungsdämpfer nach Anspruch 6,
**dadurch gekennzeichnet,**
**dass** das weitere Ventil (12) mindestens zweistufig durchströmbar ist.

8. Schwingungsdämpfer nach Anspruch 1,
**dadurch gekennzeichnet,**
**dass** das Dämpfungsventil (6) in einer Strömungsverbindung (7) des Kolbens (2) angeordnet ist und über außenliegende, in der Kolbenstange (3) verlaufende Stellmittel (13) einstellbar ist.
